(19) Europäisches Patentamt
European Patent Office
Office européen des brevets

(11)  EP 4 723 015 A1

(12)  EUROPEAN PATENT APPLICATION

(43) Date of publication:
08.04.2026  Bulletin 2026/15

(21) Application number: 24383076.7

(22) Date of filing: 04.10.2024

(51) International Patent Classification (IPC):
$G06Q\ 30/018\ ^{(2023.01)}$  $H04W\ 12/104\ ^{(2021.01)}$

(52) Cooperative Patent Classification (CPC):
G06Q 30/018; H04W 12/104; H04W 12/61;
H04W 12/64

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Telefónica Innovación Digital, S.L.
28050 Madrid (ES)

(72) Inventor: Lopez Coya, Pablo Ignacio
28050 Madrid (ES)

(74) Representative: Carlos Hernando, Borja
Garrigues IP, S.L.P.
Plaza de Colón, 2
28046 Madrid (ES)

(54) **METHOD AND COMPUTER PROGRAMS FOR DETERMINING HUMAN CONDITION OF A TARGET**

(57)  A method and computer program for determining human condition of a target are provided. The method obtains validated geolocation data points of said target from a database, and determines whether a given trajectory depicted by a set of the validated geolocation data points belongs to a human by computing a plurality of models using a behavioural algorithm, the plurality of models including two or more of the following models: a first model evaluating a likelihood of geographical location in terms of human habitability, a second model evaluating a likelihood of social interaction, identifying places that are typically frequented by humans, and a third model evaluating a likelihood of the given trajectory being physically possible for a human within a specified time frame. Finally, the method provides a weight to each one of the computed plurality of models, and computes a human condition score based on a combination of the provided weights.

Location Mark Dataset (LMD)  →  Human Movement Behaviour Algorithm  →  Network Based PoP

**Fig. 1**

**Description**

**TECHNICAL FIELD**

The present invention relates to a method and computer program for determining human condition of a target. The invention particularly provides *Proof-of-Personhood* based on validated location data certifying that a single target such as a person has been present in a specific location at a concrete time. By combining different network paradigms, an algorithm determines with a certain level of accuracy whether the target who owns a collection of location data points can generate a solid proof of being human.

**BACKGROUND OF THE INVENTION**

Proof Of Personhood

The concept of "Proof of Personhood" was in an emerging phase within blockchain and decentralized technologies research. Proof of Personhood focuses on ensuring the authenticity and uniqueness of digital identities in decentralized environments, such as blockchain, where identity verification is crucial to prevent fraud and ensure transaction integrity. In academic literature, various approaches have been explored to address the Proof of Personhood challenge.

The biometric approach

A common perspective involves the integration of biometric technologies, such as facial recognition, fingerprints, or even behavioral patterns, to establish an individual's unique identity in the digital context. Research, such as "Advances in Security and Privacy of Multimedia Big Data in Mobile and Cloud Computing", Gupta et al. (2018), has examined the effectiveness of facial biometrics in decentralized environments, highlighting challenges in terms of privacy and security that need to be addressed. Moreover, the only mechanism that can differentiate people in non-trusted environments is their biometrics. Biometrics are the most fundamental means to verify both humanness and uniqueness. Most importantly, they are universal, enabling access irrespective of nationality, race, gender or economic means. Additionally, biometric systems can be highly privacy-preserving if implemented properly. Further, biometrics enables the previously mentioned building blocks by providing a recovery mechanism (that works even if someone has forgotten everything) and can be used for authentication. Therefore, biometrics also enable the Proof of Personhood credential to be person bound.

Towards Person Uniqueness at global scale

Authenticating a user via FaceID as the rightful owner of a phone is very different from verifying billions of people as unique. The main differences in requirements relate to accuracy and fraud resistance. With FaceID, biometrics are essentially being used as a password, with the phone performing a single 1:1 comparison against a saved identity template to determine if the user is who they claim to be. Establishing global uniqueness is much more difficult. Biometrics must be compared against (eventually) billions of previously registered users in a 1:N comparison. If the system is not accurate enough, an increasing number of users will be incorrectly rejected.

Blockchain-based Proof Of Location (PoL)

Scientific article "Blockchain-Based Proof of Location" Michele Amoretti et al. 2020, discusses that it is well known that mobile users are capable of accumulating their own GPS logs conveniently (ex. Google Map Timeline) leading to generation of huge amount of location traces. This provides unprecedented opportunities to analyze and derive valuable knowledge of human mobility patterns, specifically, human interests and intentions which in turn facilitate varied location-based services. However, relying on non-validated GPS data entails significant risks that can compromise the accuracy and reliability of location-based services and applications. Unvalidated GPS data, whether due to errors in signal reception, spoofing attacks, or intentional manipulation, can lead to incorrect location estimations, affecting navigation systems, location-based advertising, and emergency services.
On the other hand, document "Unique in the Crowd: The privacy bounds of human mobility", Montjoye et al. 2013, highlights the vulnerabilities of GPS data to various forms of attacks and inaccuracies, emphasizing the need for validation and integrity checks to ensure the trustworthiness of location information. Making assumptions based on non-validated GPS data may result in misinformed decisions, privacy breaches, and security vulnerabilities. Therefore, it is crucial for developers, service providers, and users to implement robust validation mechanisms, employ encryption techniques, and stay vigilant against potential threats to the integrity of GPS data.

Proof of location mechanisms can play a crucial role in addressing the risks associated with non-validated GPS data by providing a means to verify the authenticity and accuracy of location information. Decentralized mechanisms utilize cryptographic protocols and consensus algorithms to confirm that a device or entity is physically located at a specific geographic coordinate. By requiring participants to provide cryptographic proofs of their location, such as proximity to certain landmarks or geographical signatures, proof of location mechanisms can mitigate the risks of spoofing attacks and ensure the integrity of location-based data. Additionally, integrating proof of location into location-based services and applications can enhance trust and reliability, as users can have confidence that the information they receive is genuine and not subject to manipulation. For instance, document "Blockchain for Distributed Systems Security" chapter 9 "Permissioned and permissionless blockchains", Miller et al. 2018, explores various approaches to implementing proof of location mechanisms, including blockchain-based solutions and decentralized consensus protocols, highlighting their potential to improve the security and accuracy of location-based systems while preserving user privacy.

Centralized proposed schemes based on network infrastructure usually rely on servers for storing proofs of location, which users must trust either explicitly or implicitly. Proof of Location might be generated by applying several network paradigms. Some examples are:

- Cell Tower Triangulation: By analyzing the signal strength and timing of a device's communication with multiple cell towers, the network can estimate a location.

- GPS (Global Positioning System): Signals from satellites to determine a precise location. GPS provides highly accurate location data, especially in outdoor environments.

- Wi-Fi Positioning/Fingerprinting: Location is determined by scanning nearby Wi-Fi networks and comparing the detected Wi-Fi access points with a database of known Wi-Fi network locations.

Finally, proof of location can be seen as a digital certificate that attests someone's presence at a certain geographic location, at a certain time and by leveraging this kind of mechanism, developers and service providers can mitigate the risks associated with non-validated GPS data and enhance the overall integrity of location-based services.

Movement approach

As disclosed in document "Modeling Human Movement Behavior Knowledge from GPS Traces for Categorizing Mobile Users", S. Gosh et al. 2017, human movement analysis and categorization of mobile users based on their movement semantics are challenging tasks. Further, due to security and privacy issues, insufficient labelled or user-annotated data (or, ground-truth data) makes the user-classification from GPS traces more complex. To that end, the document presents a framework which models user movement patterns containing both spatio-temporal and semantic information, generates semantic stay-point taxonomy by analyzing GPS traces of all users, summarizes individuals' GPS traces and clusters users based on the semantics of their movement patterns. Moreover, it proposes a method to transfer knowledge derived from a set of GPS traces of a geographically distanced but similar type of ROI to alleviate labelled data scarcity problem while user categorization in a particular ROI.

This semantic enrichment of raw GPS log bridges the gap between collected GPS traces and various location based applications. Several techniques are proposed for this purpose:

- Semantic Trajectory Processing: Research trends in overcoming the semantic gap between raw GPS log collected from mobile devices and personal activity performed in that location. Most of the recent studies append contextual information along with the time-stamped latitude, longitude information for enhancing semantic richness of the trajectories.
- Trajectory Segmentation: Trajectory segmentation is another pre-processing step of trajectory data mining. In several work, trajectory is shown as a sequence of stop and moves, correlations between different locations or even a set of detections based on semantic places automatically from GPS trajectories. Other studies presents a Bayes classifier to categorize trajectory stop-points into predefined category of places.
- Syntactic Trajectory: Other studies present a novel idea to map a syntactic trajectory to a semantic trajectory. Based on the movement pattern discovery and human behavior inference, it formalizes a semantic-enriched knowledge discovery process.

In spite of the known solutions, Worldcoin, through its World ID system, aims to establish a robust proof-of-personhood (PoP) mechanism by issuing unique IDs to individuals via biometric verification, specifically iris scans. While this approach offers heightened security, akin to physically authenticating oneself at a bank or notary, it also poses several significant risks related to privacy, data security, and regulatory challenges.

Privacy and Security Concerns

One of the foremost risks associated with biometric authentication is the potential compromise of highly personal and immutable data such as iris scans. Unlike passwords or cryptographic keys, biometric traits cannot be reset if they are exposed or stolen, leaving individuals vulnerable to identity theft and fraud. The permanent nature of biometric data means that once compromised, it could be misused indefinitely.

Moreover, storing such sensitive data presents risks of unauthorized access or hacking. If biometric databases are breached, the consequences can be far-reaching, as individuals cannot alter their biometric traits to regain security. Jain et al. (2016) and Li et al. (2019) have emphasized the importance of stringent encryption protocols and privacy-preserving techniques to mitigate these risks.

Ethical and Legal Considerations

Centralized storage of biometric data, such as in Worldcoin's case, raises ethical concerns, particularly around consent, surveillance, and potential misuse. There is also a risk of false positives or negatives during the authentication process, potentially leading to unauthorized access or the exclusion of legitimate users. These issues highlight the need for carefully managed, transparent systems that respect user consent and comply with data protection laws.

Regulatory Scrutiny and Bans

Worldcoin's biometric-based approach has attracted significant regulatory scrutiny, particularly under data protection frameworks like the European Union's General Data Protection Regulation (GDPR), which provides stringent safeguards for sensitive personal data. For instance, Spain temporarily banned Worldcoin's operations, citing privacy risks and inadequate consent mechanisms. The Spanish data protection regulator (AEPD) emphasized that processing biometric data entails "high risks" to people's rights, particularly regarding data gathered without proper safeguards.

Similarly, Kenya suspended Worldcoin's activities due to concerns about user safety and unclear data storage practices, while other countries like France, Germany, and India have expressed apprehension regarding both privacy and potential misuse of biometric data in illegal activities like money laundering. These countries are particularly wary of the invasive nature of iris scanning and the potential risks it poses.

Global Pushback

Countries such as Kenya and Spain have already taken regulatory action by suspending or banning Worldcoin's operations. As of August 2023, Kenya was the first to ban Worldcoin, with other nations like France, Germany, and India scrutinizing the project. Kenya's interior ministry halted the project pending an investigation into public safety risks, and authorities questioned whether offering financial incentives for iris scans constituted an inducement, raising ethical concerns about obtaining informed consent.

In light of these challenges, new and improved solutions for determining human condition of a target are thus still needed.

**DESCRIPTION OF THE INVENTION**

To that end, present invention proposes, according to one aspect, a method for determining human condition of a target. The method comprises performing by one or more processors the following steps: obtaining, from a database, validated geolocation data points of said target, each validated geolocation data point comprising three parameters including longitude, latitude and timestamp of a given geolocation, and being associated with an International Mobile Subscriber Identity (IMSI); determining whether a given trajectory depicted by a set of the validated geolocation data points belongs to a human by computing a plurality of models using a behavioural algorithm, the plurality of models including two or more of the following models: a first model evaluating a likelihood of geographical location in terms of human habitability, a second model evaluating a likelihood of social interaction, identifying places that are typically frequented by humans, and a third model evaluating a likelihood of the given trajectory being physically possible for a human within a specified time frame; providing a weight to each one of the computed plurality of models; and computing a human condition score based on a combination of the provided weights.

In some embodiments, the geolocation data points are acquired using geolocation information from different communication network segments or input computing devices. The geolocation information can be adjusted based on at least one of: a window-size parameter that adjusts a volume of the geolocation information acquisition and/or a granularity parameter that adjusts a sampling rate of the geolocation information acquisition.

In some embodiments, the geolocation information is further processed using noise removal, normalization, and/or feature extraction techniques.

In some embodiments, the first model is computed by identifying habitable points using the set of validated geolocation data points and one or more of the following datasets: a dataset that assess the suitability of locations for human habitation, a dataset that provides human population distribution, a dataset that provides spatial information on human settlements, a dataset that provides spatial information on the risk level of natural disasters, and by computing a probability of the target being human as the ratio of the identified habitable points to the total number of geolocation data points in the set.

In some embodiments, the places in the second model are identified by obtaining places sorted by proximity with their associated establishment types by querying a social context database.

In some embodiments, the querying to the social context database can comprise: representing each irregular polygon of a set of irregular polygons defining a given geographic space as a set of N geographical coordinates; computing a centroid of each irregular polygon using Green's Theorem, and averaging the coordinates of all vertices of the irregular polygon; computing a distance to the computed centroid for each side of each irregular polygon; computing a radius of an inscribed circle using a minimum distance of the computed distance; using the computed centroid and radius of each irregular polygon as parameters in the query to the social context database; and generating a histogram based on the types of establishments obtained from the social context database.

In some embodiments, a list that only includes establishment types can be also generated by filtering the generated histogram. Additionally, the generated list can be ranked based on a ratio of significant human places to a total number of places included in the histogram.

According to the invention, the third model can be computed based on a speed required to cover a distance of the given trajectory in the specified time frame. In this case, the method compares the computed speed with a speed threshold.

In some embodiments, the speed is calculated by obtaining positional data (e.g. latitude and/or longitude) of the target at two different points in time and associated timestamps; converting the obtained positional data to radians, and calculating a difference of the positional data between the two different points; calculating a distance between the two different points on an Earth's surface; calculating a time different using the timestamps; and calculating the speed based on the distance of the given trajectory and the calculated time.

In some embodiments, the speed threshold comprises a maximum speed threshold, and the computed speed is below the maximum speed threshold, and the method further comprising computing a ratio of one-hour segments where the computed speed is below the maximum speed threshold to a total number of segments into which the set of validated geolocation data points is divided. Alternatively, the method can compute the ratio of one-hour segments in which the computed speed is below the maximum speed threshold and no extreme mobility pattern (i.e. the target has been stationary for more time than a first predefined threshold or has been in continuous movement for more time than a second predefined threshold) is detected to the total number of segments into which the set of validated geolocation data points is divided.

In some embodiments, the means of transport (i.e. car, train, plane, bicycle, etc.) of the target can be computed using the computed ratio of one-hour segments and at least one social context database.

In some embodiments, the method can also apply a hashing algorithm to each validated geolocation data point.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

**BRIEF DESCRIPTION OF THE DRAWINGS**

The previous and other advantages and features will be more fully understood from the following detailed description of embodiments, with reference to the attached figures, which must be considered in an illustrative and non-limiting manner, in which:

Fig. 1 schematically shows the main steps of the proposed method.

Fig. 2 schematically shows how the geolocation data points are obtained, according to an embodiment.

Fig. 3 schematically shows how the user location mark dataset is defined, according to an embodiment.

Fig. 4 schematically shows how the behavioral algorithm determines that a trajectory depicted by a set of the validated geolocation data points belongs to a human being, according to an embodiment.

Fig. 5 graphically illustrates an embodiment to determine and prove that a human being is delivering a phone call.

Fig. 6 graphically illustrates an embodiment for registering proof of communications in protected databases.

## DETAILED DESCRIPTION OF THE INVENTION AND OF PREFERRED EMBODIMENTS

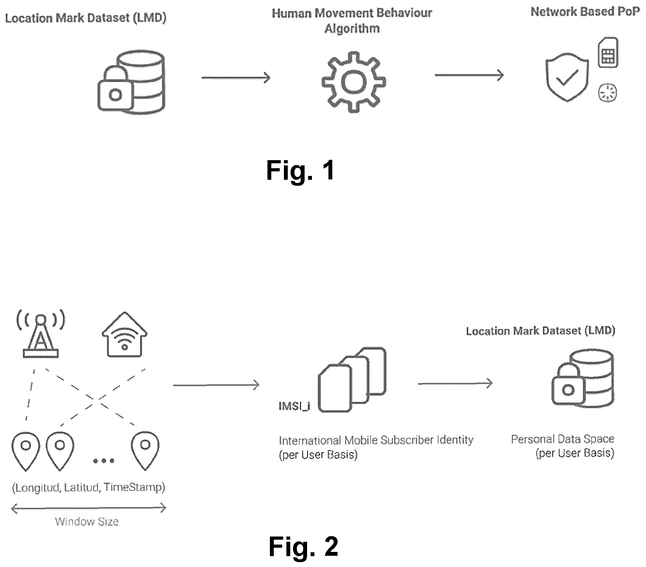

The present invention presents a mechanism that provides Proof-of-Personhood (i.e. human condition) based on validated geolocation data certifying that a single target, particularly a person, has been present in a specific location at a concrete time, and determines whether the target is really a human. The underlying mechanism can be split into three steps as shown in Fig. 1.

Particularly, to generate such solid proof, a behavioural algorithm determines whether a given trajectory depicted by the validated geolocation data belongs to a human by: computing a plurality of models, weighting each one of the computed models, and computing a human condition score based on the provided weights.

Following, the different steps executed by the proposed method are detailed, according to different embodiments.

### Location Data Acquisition

Telecommunications operators offer significant guarantees regarding the authenticity and security of the geolocation data they provide. The data is derived from robust network infrastructures, including cell towers, Wi-Fi networks, and GPS signals, which are difficult to manipulate or forge. Telecommunications operators implement advanced encryption and authentication protocols to ensure that the data transmitted is secure and verifiable. Continuous monitoring and stringent data integrity checks further protect against tampering and unauthorized access. As a result, the geolocation data provided by telecommunications operators is highly reliable and resistant to forgery, making it a trustworthy source for critical applications such as navigation, emergency response, and location-based services.

Fig. 2 shows how the network provides (proof-of-location) geolocation data points in terms of the tuple: (longitude, latitude, timestamp). Each data point is supplemented with the IMSI (International Mobile Subscriber Identity) so each individual joining the network is undoubtedly identified.

In some embodiments, an Input Data Handling Module is responsible for acquiring the geolocation information from different network segments or input computing devices. The module can use two parameters for accuracy adjustment: i) window-size: to adjust the data capture volume by increasing or decreasing the time that the network reports data about a specific IMSI; ii) granularity: to adjust the sampling rate for the data acquisition.

The module can also perform any necessary preprocessing steps such as noise removal, normalization, or feature extraction to prepare the raw geolocation data for hashing.

The resulting data is aggregated to a dataset, in this particular case termed as "Location Mark Dataset", which as per IMSI basis is stored in the database. In the figure, "Personal Data Space" refers to the collection of points that belongs to a specific IMSI.

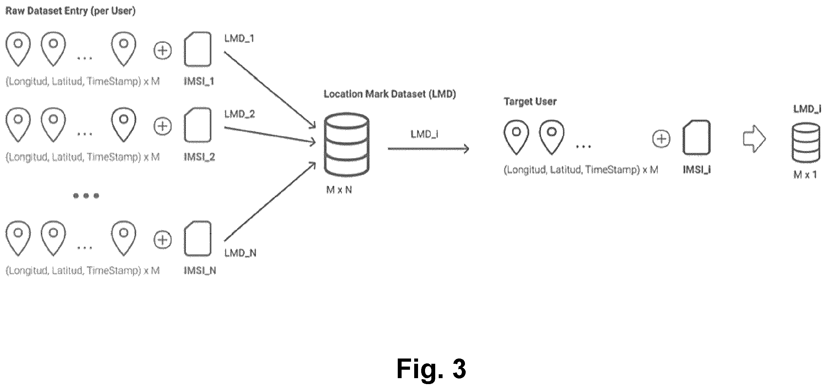

Fig. 3 illustrates how the algorithm collects M samples for each enabled $IMSI_i$. Assuming there are N IMSIs activated in the system, the dimension of the dataset would be M×N samples of geolocation data. Fig. 3 also depicts that each geolocation sample comprises three parameters: longitude, latitude, and timestamp. For each $IMSI_i$, a specific dataset denoted by $LMD_i$, which would have dimensions of M×1, can be thus defined.

### Behavioural Algorithm

The behavioural algorithm or Human Movement Behavior (HMB) algorithm, in contrast to physiological biometrics, which relies on data generated from a measurement of human physical characteristics, relies on data that measures the way that humans move and act, delivering a far more passive solution.

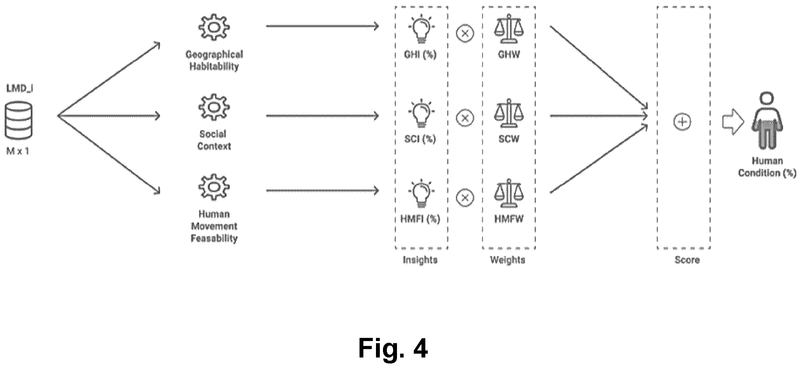

Fig. 4 shows how the behavioural algorithm exploits mainly 3 techniques/models to determine whether the trajectory depicted by a set of geolocation data points belongs to a human being. Particularly, each model insight is balanced for the conclusion following a weighting approach. The final score reflects the human condition of the sample, and it is measured as a percentage of the combination of the previous models.

In an embodiment, as a result of applying a prioritization criteria based on the impact and relevancy of the nature of the data in the task of characterizing humanness, the weighted sources could include the following percentages: Geographical Habitability (GHW = 40%), Social Context (SCW = 20%), Human Movement Feasibility (HMFW = 40%).

In the following, the approach followed by each model to determine insights about the human condition of the data sample is detailed.

First Model: Geographical Habitability

This model provides insights about the feasibility of the movement in terms of geographical conditions (i.e.: historical data based geographical coordinates pointing to the sea or to a place where no human life is possible would be crucial).

There are datasets available that provide information on human habitability based on geographic coordinates. Some datasets may focus on specific aspects of habitability, such as climate suitability or disaster risk, while others may provide more comprehensive assessments incorporating multiple factors. One prominent example is the Human Habitation Index (HHI), which assesses the suitability of locations for human habitation based on various factors such as climate, terrain, access to resources, and infrastructure.

However, it's worth noting that datasets on human habitability can vary significantly in scope, methodology, and coverage. Here are a few examples that can be used by the present invention:

- Gridded Population of the World (GPW): This dataset provides estimates of human population distribution at a global scale, which can indirectly indicate areas of human habitability. It includes population counts and density estimates for grid cells based on various input data sources.
- Global Human Settlement Layer (GHSL): GHSL provides spatial information on human settlements, including built-up areas, population density, and urbanization patterns. It can be useful for assessing the level of human habitation in different regions.
- WorldPop: It produces high-resolution spatial datasets on population distribution and demographics, which can be used to infer patterns of human habitation. It includes population density maps and demographic characteristics at various administrative levels.
- Disaster Risk Assessment Datasets: Some datasets focus on assessing the risk of natural disasters and other hazards, which indirectly influence human habitability. Examples include datasets on flood risk, earthquake exposure, and climate vulnerability.

Given a sequence of geolocations, the probability of determining whether a target is human can be calculated as the ratio of habitable geographic points to the total number of points in the sequence under study. Therefore, by analyzing the previous datasets, habitable points can be identified. Consequently, the probability of the target being human is the aforementioned ratio. This approach allows for a systematic evaluation of the likelihood that the entity associated with the geolocation sequence is human, based on the habitability of the locations involved. If m is defined as the number of habitable locations detected in the sequence and M as the total number of locations in the sequence, *GHI* can be defined as follows:

$$GHI(\%) = \frac{m}{N}$$

Second Model: Social Context

This model assesses the likelihood of social interaction, identifying a set of places that are typically frequented by humans but not necessarily by machines (e.g., hospitals, supermarkets, residences, churches, offices, etc., which are common locations for human interaction).

Analyzing irregular polygons in geographic space is a fundamental task in spatial analysis and geographic information systems (GIS). Understanding the distribution of establishments and significant locations within these polygons can provide valuable insights for urban planning, resource allocation, and other applications. Therefore, the invention proposes a method for conducting such analysis by combining geometric calculations with real-world data from a social context database (services like the Google Maps API may be seen as a suitable example as it provides relevant insights based on embedding street locations, geocoding addresses, and real-time establishments evolution). In a particular embodiment, the method analyzes irregular polygons in geographic space by leveraging Green's Theorem to calculate centroids and the output of the social context database to retrieve nearby locations. The algorithm computes the centroid of each irregular polygon and queries the social context database to obtain nearby places sorted by proximity. A histogram is generated based on the types of establishments associated with each polygon. In some embodiments, filtering is applied to identify relevant locations in terms of human social context.

The use of irregular polygons in location calculations is justified by the manner in which telco operators return geolocation information related to the mobile cell network in the form of a set of coordinates that defines an irregular polygon. The reason is mainly because unlike regular shapes, irregular polygons can accurately represent the diverse and complex coverage areas of mobile cells, which are often irregular due to natural and man-made obstructions, varying signal strengths, and the strategic placement of cell towers. So, in the context of geolocation, using irregular polygons allow for a more precise representation of the actual boundaries and unique features of a location, considering natural landscapes, man-made structures, and other real-world irregularities. On the other hand, the centroid, or geometric center, of an irregular polygon provides a useful approximation of the "average" location within that area. This is particularly advantageous in geolocation applications where understanding the central point of a complex area can aid in navigation, resource allocation, and spatial analysis.

In some particular embodiments, when considering accuracy, the shape of the irregular polygon should closely conform to the actual geographic or man-made boundaries it represents. However, as there is not a single "best" shape for all scenarios, the following guidelines can help to determine the most effective shape:

Convex Hull: This is the smallest convex polygon that can encompass all the points in the area. It is simple to compute and often used for general purposes, but it may not always capture internal features well.

Alpha Shapes: These provide a more detailed and accurate representation by allowing the polygon to be concave, adapting to the data points more precisely. Alpha shapes are particularly useful when the area has significant indentations or irregularities.

Delaunay Triangulation: This method involves creating triangles between points and can be used to form a mesh that accurately represents the area. The centroid of the combined triangles can then be used to approximate the central location.

In a particular embodiment, the second model is computed as follows:

1) Data Representation: Each irregular polygon is represented as a set of N geographical coordinates $Pi=(xi,yi)$ where $i=1,2,...,N$

2) Centroid Calculation: The centroid of an irregular polygon is computed using Green's Theorem, which states that the centroid (C) of a simple, closed curve can be calculated as:

$$C = \left(\frac{1}{6A}\sum_{i=0}^{N-1}(x_i + x_{i+1})(x_iy_{i+1} - x_{i+1}y_i), \frac{1}{6A}\sum_{i=0}^{N-1}(y_i + y_{i+1})(x_iy_{i+1} - x_{i+1}y_i)\right),$$ where A is the signed area of the polygon.

3) Inscribed Circumference Radius:

a) Calculate the centroid of the polygon, for instance, by averaging the coordinates of all vertices.
b) For each side of the polygon, calculate the distance from the centroid, and keep track of the minimum distance found.
c) The minimum distance found in the previous calculation represents the radius of the inscribed circle.

4) Social context database query: The centroid and the radius of the inscribed circumference of each polygon is used as the center point and radius for the query. The database returns a set of nearby locations with their associated establishment types.

5) Histogram Generation: Based on the types of establishments obtained from the social context database a histogram H is generated, where $H[i]$ represents the frequency of establishments of type $i$.

6) To filter out irrelevant data, a list of significant human places (such as home, work, school, hospital, etc.) is defined. Only establishment types from this list are considered, as it is noted that replicating the complex human movement patterns in these locations would be difficult even for advanced generative AI embodied in a robot, which could otherwise falsify geolocation footprints by simulating realistic movements and behaviors.

7) The filtered list is ranked based on the ratio of significant human places to the total number of places in the histogram. The result is expressed as a percentage, representing the degree to which the sample data reflects genuine human social context.

Some examples of social context datasets that can be used by the present invention are:

- The Google Maps API: is a set of web services provided by Google that allows developers to embed Google Maps into their websites and applications, enabling functionalities such as displaying maps, geocoding addresses, providing directions, and real-time traffic updates. In the context of geolocation and determining specific locations, the Google Maps API can assist by accurately plotting irregular polygons on a map, calculating their centroids, and providing detailed spatial data. This can enhance the precision of location-based analyses and visualizations, ensuring more reliable and informative results for users.

- Global Rural-Urban Mapping Project (GRUMP): GRUMP provides datasets on urban extent, population density, and land use at a global scale. It can be useful for distinguishing between urban and rural areas and assessing urbanization trends.

- NASA Socioeconomic Data and Applications Center (SEDAC): SEDAC offers various datasets related to human population, settlements, and environmental factors. These datasets can be used to assess human habitation patterns and their interactions with the environment.

<u>Third model: Human Movement Feasibility</u>

This model evaluates segmented trajectories to determine whether it is physically possible for a target to achieve the given movement within the specified time frame. For example, consider a trajectory that lasts for two hours and spans 5000 kilometers. To understand whether this trajectory is feasible, the average speed required to cover such a distance in the given time is considered. In this case, the average speed would be 2500 kilometers per hour (5000 km divided by 2 hours), which is far beyond the capabilities of any human or conventional means of transportation like cars or trains. Human beings, even with the fastest commercial aircraft, which travel at speeds of approximately 900 kilometers per hour, cannot achieve this speed. Therefore, this model helps identifying trajectories that are implausible for humans, suggesting either an error in the data, the use of an extraordinary means of travel, or potential unusual human activity.

To calculate the speed of a target, positional data thereof such as the latitude and longitude at two different points in time is needed. To illustrate the mechanism, in an embodiment, the GPS coordinates are used. However, it is important to note that this method is equally applicable to other sources of geographical positioning, such as mobile network coverage cells. The underlying principles and calculations remain consistent across different types of positional data.

In a particular embodiment, the third model is computed as follows:

1) Obtain GPS Coordinates and Time Stamps by letting the first GPS coordinate be *(lat1, lon1)* at time *t1* and the second GPS coordinate be *(lat2, lon2)* at time *t2*.

2) Convert coordinates to radians, for instance, using the formula:

$$radians \ = \deg r\,ees \times \ \frac{\pi}{180},$$

So:

$$lat_1' \ = lat_1 \times \frac{\pi}{180} \ , \ \ lon_1' \ = lon_1 \times \frac{\pi}{180} \ \text{and} \ lat_2' \ = lat_2 \times \frac{\pi}{180} \ , \ \ lon_2' \ = lon_2 \times \frac{\pi}{180}.$$

3) Calculate the differences in coordinates as:

$$\Delta lat = lat_2' - \ lat_1'$$

$$\Delta lon = lon_2' - \ lon_1'$$

4) Use the Haversine formula to calculate the great-circle distance between the two points on the Earth's surface:

$$a \ = \ \sin^2\left(\frac{\Delta lat}{2}\right) \ + \ \cos(lat_1')\cos(lat_2')\sin^2\left(\frac{\Delta lon}{2}\right)$$

$$c \ = \ 2 * \ atan2\left(\sqrt{a}, \sqrt{1-a}\right)$$

$$d \ = \ R \ * c$$

where atan2 is the 2-argument arctangent, and *R* is the Earth's radius (mean radius = 6371 km).

5) Calculate time difference by converting the time difference to hours:

$$\Delta t = \frac{t_2 - t_1}{3600}$$

where $t1$ and $t2$ are in seconds.

6) Calculate speed:

$$speed = \frac{d}{\Delta t}$$

where d is the distance in kilometers and $\Delta t$ is the time in hours.

7) Determine human condition based on human speed limits. Once the speed has been calculated, it is determined whether it is feasible for a human being to achieve such a speed. A maximum speed threshold is used in that regard. The latter, in some embodiments, can be selected based on the following academic research:

- Weyand, P. G., Sternlight, D. B., Bellizzi, M. J., & Wright, S. (2000). "Faster top running speeds are achieved with greater ground forces not more rapid leg movements. " Journal of Applied Physiology, 89(5), 1991-1999.
- *Usain Bolt's 100m World Record Analysis. BBC News. (2009). "How Fast is Usain Bolt?"*
- Bundle, M. W., Hoyt, R. W., & Weyand, P. G. (2003). "High-speed running performance: a new approach to assessment and prediction. " Journal of Applied Physiology, 95(5), 1955-1962*.*

The method concludes that if the calculated speed exceeds the threshold, it is highly probable that the target is not a human being.

In some embodiments, given a sequence of geolocations, the probability of determining whether a target is human is calculated by the ratio of one-hour segments where the average speed is below the Maximum Human Speed (MHS) to the total number of segments into which the data sequence is divided. This segmentation into one-hour intervals is analogous to speed enforcement using section control radar systems, which measure average speeds over fixed distances. So, if $n$ is defined as the number of segments where the average speed is under the MHS and N as the total number of segments in the sequence *HMFI* can be defined as follows:

$$HMFI(\%) = \frac{m}{N}$$

In some embodiments, the method also accounts for outliers based on extreme mobility patterns, such as a target remaining stationary for 24 hours, which is highly unlikely to be human, or a target continuously moving without rest, which also suggests non-human activity. Considering typical human sleep patterns, where no movement is expected, further refines the identification of human behavior.

In some embodiments, as the target may be traveling in a vehicle, which could potentially complicate the aforementioned approach, the algorithm incorporates data pertaining to areas of human habitation and sources of social context information to identify typical paths followed by humans. In other words, if the target is driving a car, the algorithm can infer this by detecting the travel pattern on a highway. Similarly, if air travel is suspected, the algorithm can determine this by recognizing that the origin and destination of the target are airports, based on social context data. In those cases, a maximum speed specific to the suspected travel means shall be considered to determine the probability of the target being human.

The present invention leverages a concept known as "human entropy" to identify and validate human presence with a degree of accuracy, based on the principle that a human being can only occupy one specific physical location at a given time. To refine the scope of the "Network-Based Proof of Personhood" (NBPoP), the following two assumptions are applied in certain embodiments: "An entity willing to execute a transaction in a digital domain is likely to be human since it is in possession of a SIM card with an associated and registered IMSI that has obtained a Proof of Personhood during the last N months in terms of the HMB algorithm"; "Moreover, since the Proof of Personhood is obtained by means of a personal fingerprint history is unlikely that two sets of verified data sequences might be equal".

In an embodiment, the statement of uniqueness can be obtained as follows: i) a hashing mechanism is applied to the Location Mark Dataset associated with an IMSI. Hashing algorithms such as SHA-256, SHA-3, or BLAKE2 can be used to generate a unique hash value; ii) the same process is repeated for each IMSI within the system; iii) a collection of unique, equally formatted hashes is obtained; iv) the hash of a LMD is compared with all other hashes to ensure that the Proof of Personhood generated for each IMSI is unique and different from any other IMSI.

To demonstrate the uniqueness of Proof of Personhood, two Location Mark Datasets, $D_1$ and $D_2$, are considered. It is known that $D_1$ is not equal to $D_2$, meaning that at least one bit differs between the two datasets. The SHA-256 hashing function is applied to each dataset, producing $H(D_1)$ and $H(D_2)$, respectively.

For contradiction, assume $H(D_1) = H(D_2)$. This would imply that two distinct datasets have generated identical hash values, which constitutes a collision in the SHA-256 algorithm. However, due to the cryptographic properties of SHA-256, such collisions are highly improbable. Cryptographic hash functions like SHA-256 are designed to be both one-way and deterministic, meaning any change in the input data should result in a completely different hash value. Therefore, if $D_1$ and $D_2$ are different, their hash values $H(D_1)$ and $H(D_2)$ are almost certainly different as well. This guarantees the uniqueness of Proof of Personhood.

The system can evaluate an accuracy metric (Acc (%)) that quantifies the reliability of Proof of Personhood based on the behavioral algorithm and assumptions stated above. The accuracy metric will vary depending on the algorithm parameters: window-size and granularity settings. Theoretical derivation of the optimal parametric condition will aim to achieve maximum accuracy while minimizing both window size and sampling rate.

Following, two specific use cases of application of the present invention are detailed.

Telco Channels enhanced with Proof of Personhood

The importance of verifying that a human being is on the other side of a phone call cannot be overstated. This verification is crucial for maintaining the integrity and security of communication, especially in contexts such as customer service, financial transactions, and confidential discussions. Ensuring the presence of a human being helps prevent fraud and identity theft by thwarting automated systems or malicious actors attempting to deceive or exploit individuals. Moreover, human verification enhances the quality of service, as human agents are better equipped to understand and respond to complex queries and emotional nuances compared to automated systems. Therefore, reliable confirmation of a human presence fosters trust, improves service delivery, and upholds the security and privacy of sensitive interactions.

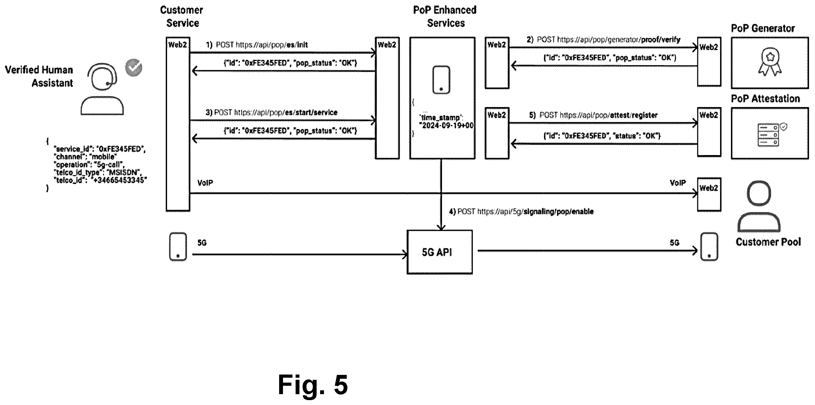

Embodiments of the present invention also provides means to the Mobile Network signaling system to determine and prove to the other speaker that a human being is effectively delivering the phone call. Fig. 5 depicts the main components of the system and their interaction:

- Pop Enhanced Services
- Pop Generator
- Pop Attestation

External components of the system are the customer Service and the 5G API.

The process of Fig. 5 is as follows:

1) A third party employee wants to contact a customer via phone call, so he uses a Customer Service Application which is installed in his Mobile phone. The application uses a client that implements the PoP Enhanced Services API. The employee initializes the service by summoning the end point "init" with a set of data:

- service id: a unique identifier for the service requesting pop
- channel: the telco media to communicate with the receiver
- operation: telco operation to contact the receiver
- telco_id_type: mechanism used by the telco operator to identify the caller
- telco_id: identifier actual data
  Example

```
{
    "service_id":                                    "0xFE345FED",
    "channel":                                       "mobile"
    "operation":                                     "5g-call",
    "telco_id_type":                                 "MSISDN",
    "telco_id":                                      "+34665453345"
}
```

2) In first place, the Pop Enhanced Services module launches a request to the PoP Generator where the user was previously granted with PoP credentials. By passing the telco_id in the request (/proof/verify) the PoP Generator is able to check whether the caller has been validated as a human. Once the caller has been successfully validated the PoP Enhanced Services:

3) responds to the Customer Service Application with an OK

4) sends a message to the 5G API endpoint "/signaling/pop/enable" with the corresponding signaling information

5) adds a timestamp to the signaling information to reflect the exact moment when the pop and therefore human intervention is taking place in the call and sends it to the PoP Attestation API endpoint "/attest/register"
Example:

```
{
    "service_id": "0xFE345FED",
    "channel":                                              "mobile"

    "operation":                                            "5g-call",


    "telco_id_type": "MSISDN",

    "telco_id": "+34665453345"

    "time-stamp": "2024-09-19+00:00:00"
}
```

Audit Tools for PoP based communications

Registering proof of communications in protected databases, where human intervention can be demonstrated, is of paramount importance, particularly in legal contexts. These records provide verifiable evidence that can confirm the authenticity and integrity of interactions, ensuring that the communication involved an actual human and not an automated system or malicious actor. Such proof is crucial in legal disputes, as it can substantiate claims, verify agreements, and demonstrate compliance with regulations. By securely storing these records, organizations can protect themselves against fraud, resolve conflicts more effectively, and maintain transparency in their operations. Additionally, these registers serve as critical documentation in auditing processes and regulatory investigations, thereby reinforcing the accountability and reliability of communication practices within the organization.

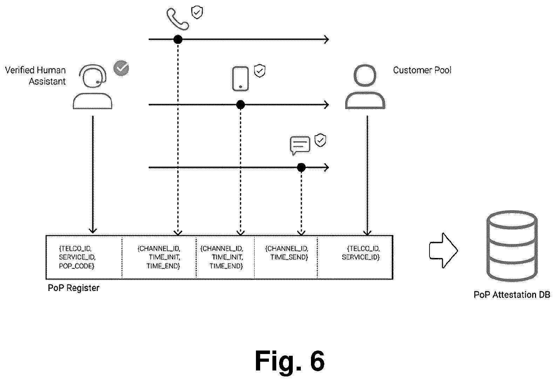

Fig. 6 shows the minimum information that each registry of the PoP Attestation DB should have:

1) Information related to the caller:

- TELCO_ID: numeric code used by the telco operator to identify the caller
- SERVICE_ID: a unique identifier for the service requesting pop
- POP_CODE: a code to identify the pop mechanism utilized to proof human intervention in the operation

2) Information related to the operation (dotted line means that an operation may take place in different telco channels but the attestation registry can only record proof once at a time)

- CHANNEL_ID: a unique identifier for the selected telco channel
- TIME_INIT: a timestamp reflecting the beginning of the phone call
- TIME_END: a timestamp reflecting the end of the phone call
- TIME_SEND: a timestamp reflecting when the message was originally sent

3) Information related to the receiver

- TELCO_ID: numeric code used by the telco operator to identify the receiver

- SERVICE_ID: a unique identifier for the service requesting pop reflecting the context in which the receiver was contacted

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for determining human condition of a target, the method comprising performing by one or more processors the following steps:

   obtaining, from a database, validated geolocation data points of said target, each validated geolocation data point comprising three parameters including longitude, latitude and timestamp of a given geolocation, and being associated with an International Mobile Subscriber Identity, IMSI;
   determining whether a given trajectory depicted by a set of the validated geolocation data points belongs to a human by computing a plurality of models using a behavioural algorithm, the plurality of models including two or more of the following models:

   a first model evaluating a likelihood of geographical location in terms of human habitability,
   a second model evaluating a likelihood of social interaction, identifying places that are typically frequented by humans, and
   a third model evaluating a likelihood of the given trajectory being physically possible for a human within a specified time frame;

   providing a weight to each one of the computed plurality of models; and
   computing a human condition score based on a combination of the provided weights.

2. The method of claim 1, wherein the geolocation data points are acquired using geolocation information from different communication network segments or input computing devices, the geolocation information being adjusted based on at least one of: a window-size parameter that adjusts a volume of the geolocation information acquisition and/or a granularity parameter that adjusts a sampling rate of the geolocation information acquisition.

3. The method of claim 2, further comprising processing the geolocation information using noise removal, normalization, and/or feature extraction techniques.

4. The method of any one of the previous claims, wherein the first model is computed by:

   identifying habitable points using the set of validated geolocation data points and one or more of the following datasets: a dataset that assess the suitability of locations for human habitation, a dataset that provides human population distribution, a dataset that provides spatial information on human settlements, a dataset that provides spatial information on the risk level of natural disasters; and
   computing a probability of the target being human as the ratio of the identified habitable points to the total number of geolocation data points in the set.

5. The method of any one of the previous claims, wherein the places in the second model are identified by obtaining places sorted by proximity with their associated establishment types by querying a social context database.

6. The method of claim 5, wherein the querying to the social context database comprises:

   representing each irregular polygon of a set of irregular polygons defining a given geographic space as a set of N geographical coordinates;
   computing a centroid of each irregular polygon using Green's Theorem, and averaging the coordinates of all vertices of the irregular polygon;
   computing a distance to the computed centroid for each side of each irregular polygon;
   computing a radius of an inscribed circle using a minimum distance of the computed distance;
   using the computed centroid and radius of each irregular polygon as parameters in the query to the social context database; and
   generating a histogram based on the types of establishments obtained from the social context database.

7. The method of claim 5 o 6, further comprising:

   generating a list that only includes establishment types by filtering the generated histogram; and
   ranking the generated list based on a ratio of significant human places to a total number of places included in the histogram.

8. The method of any one of the previous claims, wherein the third model is computed based on a speed required to cover a distance of the given trajectory in the specified time frame, and the method further comprising comparing the computed speed with a speed threshold.

9. The method of claim 8, wherein the speed is calculated by:

   obtaining positional data of the target at two different points in time and associated timestamps;
   converting the obtained positional data to radians, and calculating a difference of the positional data between the two different points;
   calculating a distance between the two different points on an Earth's surface;
   calculating a time different using the timestamps; and
   calculating the speed based on the distance of the given trajectory and the calculated time.

10. The method of claim 9, wherein the positional data comprises a latitude and longitude of the target.

11. The method of any one of claims 8 to 10, wherein the speed threshold comprises a maximum speed threshold, and the computed speed is below the maximum speed threshold, the method further comprising computing a ratio of one-hour segments where the computed speed is below the maximum speed threshold to a total number of segments into which the set of validated geolocation data points is divided.

12. The method of any one of claims 8 to 10, wherein the speed threshold comprises a maximum speed threshold, and the computed speed is below the maximum speed threshold, the method further comprising computing a ratio of one-hour segments in which the computed speed is below the maximum speed threshold and no extreme mobility pattern is detected to a total number of segments into which the set of validated geolocation data points is divided, an extreme mobility pattern meaning being stationary for more time than a first predefined threshold or being in continuous movement for more time than a second predefined threshold.

13. The method of claim 11, further comprising determining a means of transport of the target using the computed ratio of one-hour segments and at least one social context database.

14. The method of any one of the previous claims, further comprising applying a hashing algorithm to each validated geolocation data point.

15. A non-transitory computer readable medium including code instructions that when executed in a computer system implement the steps of the method of claim 1.

Location Mark Dataset (LMD)    Human Movement Behaviour Algorithm    Network Based PoP

# Fig. 1

Location Mark Dataset (LMD)

IMSI_i

International Mobile Subscriber Identity (per User Basis)

Personal Data Space (per User Basis)

(Longitud, Latitud, TimeStamp)

Window Size

# Fig. 2

**Fig. 3**

**Fig. 4**

# Fig. 5

**Fig. 6**

Europäisches Patentamt
European Patent Office
Office européen des brevets

# EUROPEAN SEARCH REPORT

**Application Number**

EP 24 38 3076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/292571 A1 (BARDOUT YVES [FR]) 2 October 2014 (2014-10-02) * abstract; figures 1-3 * * paragraphs [0013] - [0076] * ----- | 1-15 | INV. G06Q30/018 H04W12/104 |
| A | WO 2021/219357 A1 (ERICSSON TELEFON AB L M [SE]) 4 November 2021 (2021-11-04) * page 21, line 14 - page 26, line 19; figures 1-15 * ----- | 1-15 | |
| A | US 2011/133888 A1 (STEVENS TIMOTHY DIRK [US] ET AL) 9 June 2011 (2011-06-09) * paragraphs [0060] - [0061] * ----- | 1-15 | |
| A | US 2023/164565 A1 (SALZMAN DROR [IL] ET AL) 25 May 2023 (2023-05-25) * abstract; figures 1-4 * * paragraphs [0032] - [0052], [0091], [0103], [0138] * ----- | 1-15 | |
| | | | **TECHNICAL FIELDS SEARCHED (IPC)** G06Q H04W |

The present search report has been drawn up for all claims

| Place of search | Date of completion of the search | Examiner |
|---|---|---|
| The Hague | 27 January 2025 | Berlea, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 3076

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2025

| Patent document cited in search report | Publication date | Patent family member(s) | | Publication date |
|---|---|---|---|---|
| US 2014292571 A1 | 02-10-2014 | CA | 2831856 A1 | 04-10-2012 |
| | | CA | 2831864 A1 | 04-10-2012 |
| | | EP | 2691789 A1 | 05-02-2014 |
| | | EP | 2691790 A1 | 05-02-2014 |
| | | ES | 2621982 T3 | 05-07-2017 |
| | | FR | 2973518 A1 | 05-10-2012 |
| | | US | 2014292571 A1 | 02-10-2014 |
| | | US | 2014320343 A1 | 30-10-2014 |
| | | WO | 2012130889 A1 | 04-10-2012 |
| | | WO | 2012130891 A1 | 04-10-2012 |
| WO 2021219357 A1 | 04-11-2021 | NONE | | |
| US 2011133888 A1 | 09-06-2011 | BR | 112012003727 A2 | 23-05-2017 |
| | | CA | 2770755 A1 | 24-02-2011 |
| | | CN | 102713949 A | 03-10-2012 |
| | | CO | 6531408 A2 | 28-09-2012 |
| | | EP | 2467812 A1 | 27-06-2012 |
| | | KR | 20120099631 A | 11-09-2012 |
| | | SG | 178484 A1 | 27-04-2012 |
| | | US | 2011133888 A1 | 09-06-2011 |
| | | WO | 2011022412 A1 | 24-02-2011 |
| US 2023164565 A1 | 25-05-2023 | GB | 2628056 A | 11-09-2024 |
| | | IL | 313048 A | 01-07-2024 |
| | | US | 2023164565 A1 | 25-05-2023 |
| | | WO | 2023095120 A1 | 01-06-2023 |

EPO FORM P0459

**REFERENCES CITED IN THE DESCRIPTION**

**Non-patent literature cited in the description**

- **GUPTA et al.** *Advances in Security and Privacy of Multimedia Big Data in Mobile and Cloud Computing*, 2018
- **MICHELE AMORETTI et al.** *Blockchain-Based Proof of Location*, 2020
- **MONTJOYE et al.** *Unique in the Crowd: The privacy bounds of human mobility*, 2013
- Permissioned and permissionless blockchains. **MILLER et al.** Blockchain for Distributed Systems Security. 2018
- **S. GOSH et al.** *Modeling Human Movement Behavior Knowledge from GPS Traces for Categorizing Mobile Users*, 2017
- **WEYAND, P. G.** ; **STERNLIGHT, D. B.** ; **BELLIZZI, M. J** ; **WRIGHT, S.** Faster top running speeds are achieved with greater ground forces not more rapid leg movements.. *Journal of Applied Physiology*, 2000, vol. 89 (5), 1991-1999
- **BUNDLE, M. W.** ; **HOYT, R. W.** ; **WEYAND, P. G.** High-speed running performance: a new approach to assessment and prediction.. *Journal of Applied Physiology*, 2003, vol. 95 (5), 1955-1962